# DEMANDE DE BREVET EUROPEEN

(11) **EP 0 744 846 A1**
(43) Date de publication de la demande: **27.11.1996**
(21) Numéro de dépôt: 96401049.0
(22) Date de dépôt: 14.05.1996
(51) Int. Cl.: H04J 4/00, H04J 13/02, H04B 7/26

(54) **Procédé pour gérer des ressources radio lors de la transmission de paquets et émetteur et récepteur mettant en oeuvre ce procédé**

(30) Priorité: 23.05.1995 FR 9506123
(71) Demandeur: THOMSON-CSF, 75008 Paris (FR)
(72) Inventeur: Ramel, Louis, 92402 Courbevoie Cedex (FR)
(74) Mandataire: Courtellemont, Alain

(57) **Abrégé**

L'invention concerne la transmission de données par paquets, dans un réseau, avec recherche d'un emploi optimal de la bande de fréquences allouée.

Les paquets sont tous constitués d'un en-tête (E1, E2) suivi d'un champ d'informations. Les en-têtes sont tous émis sur la même fréquence porteuse (Fp) et les ressources radio (Ch1, Ch2) allouées à un champ d'informations sont limitées à un parallélogramme délimité par deux premières parallèles correspondant à deux fréquences fixes (Fb, F2) extérieures aux fréquences allouées aux en-têtes et par deux secondes parallèles ayant la même pente fréquence/temps (K) pour tous les paquets et dont la position dans le temps se déduit de l'observation de l'en-tête. Ainsi, connaissant les ressources utilisées par les paquets en cours d'émission, un terminal peut émettre un nouveau paquet au plus proche des paquets en cours d'émission mais sans risque d'interférence avec eux.

Application à la transmission par paquets.

## Description

La présente invention concerne le partage des ressources radio, lors de la transmission de paquets dans un réseau radio avec gestion décentralisée des paquets par des terminaux utilisant simultanément des canaux radio différents en terme de fréquence porteuse et de largeur de bande.

La largeur d'un canal est définie par la différence, à un instant donné, entre la fréquence la plus élevée et la fréquence la plus basse utilisées.

Pour un terminal, sans informations préalables il est très difficile, rien que par l'écoute, de savoir si un autre terminal émet sur un canal et qu'elle est la largeur de ce canal ; pour cela il faut au minimum connaître la fréquence centrale avec précision ainsi que le type et la vitesse de modulation ou que la largeur exacte du canal.

Dans le cadre d'architectures décentralisées, c'est-à-dire quand il n'y a pas de station maître, les terminaux doivent avoir en temps réel une connaissance de toutes les ressources radio utilisées. Cette connaissance est très difficile à obtenir comme il a été expliqué au paragraphe précédent.

Il est connu de faire que les terminaux, pour éviter des interférences entre paquets, utilisent différents canaux mais alors ils sont incapables de communiquer entre eux s'ils sont sur des canaux différents et donc de s'échanger les informations nécessaires à la gestion des ressources radio ; l'utilisation de la bande de fréquences attribuée au réseau radio est donc loin d'être optimum.

Le but de la présente invention est d'optimiser l'emploi des ressources radio de la bande allouée à un réseau.

Ceci est obtenu en travaillant avec des paquets formés d'un en-tête suivi d'un champ d'informations radio utiles et dans lesquels, en particulier, tous les en-têtes sont émis dans une même bande de fréquences, selon un format spécifique, avec des informations sur le champ qui les suit et tous les champs sont émis avec des caractéristiques particulières, notamment en ce qui concerne leur bande de fréquences d'émission.

La présente invention a pour objet un procédé qui consiste, en particulier, à allouer, pour l'émission d'un paquet, un espace délimité de façon prédéterminée, en temps et en fréquences, tel que défini dans la revendication 1.

La présente invention a également pour objet un émetteur et un récepteur de paquets spécialement conçu pour la mise en oeuvre de ce procédé et tels que définis respectivement dans les revendications 5 et 6.

La présente invention sera mieux comprise et d'autres caractéristiques apparaîtront à l'aide de la description ci-après et des figures s'y rapportant qui représentent :
- les figures 1, 2 et 3 des diagrammes permettant d'illustrer les ressources radio allouées aux paquets par le procédé selon l'invention,
- les figures 4 et 5, respectivement les schémas d'un émetteur et d'un récepteur pour la mise en oeuvre du procédé selon l'invention.

Dans ce qui suit et dans les revendications il est question de paquets et ces paquets sont munis chacun d'un en-tête ; cet en-tête est constitué d'une suite de bits tous émis sur une même fréquence porteuse ; parmi les bits d'un en-tête les premiers ont une fonction de synchronisation, les suivants permettent la gestion des échanges d'informations.

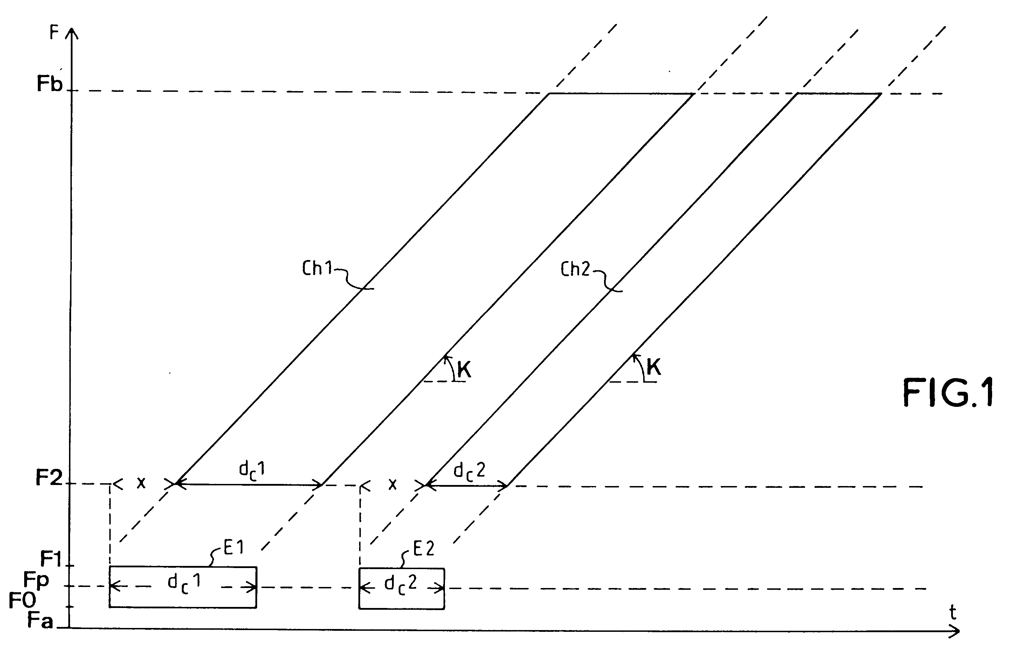

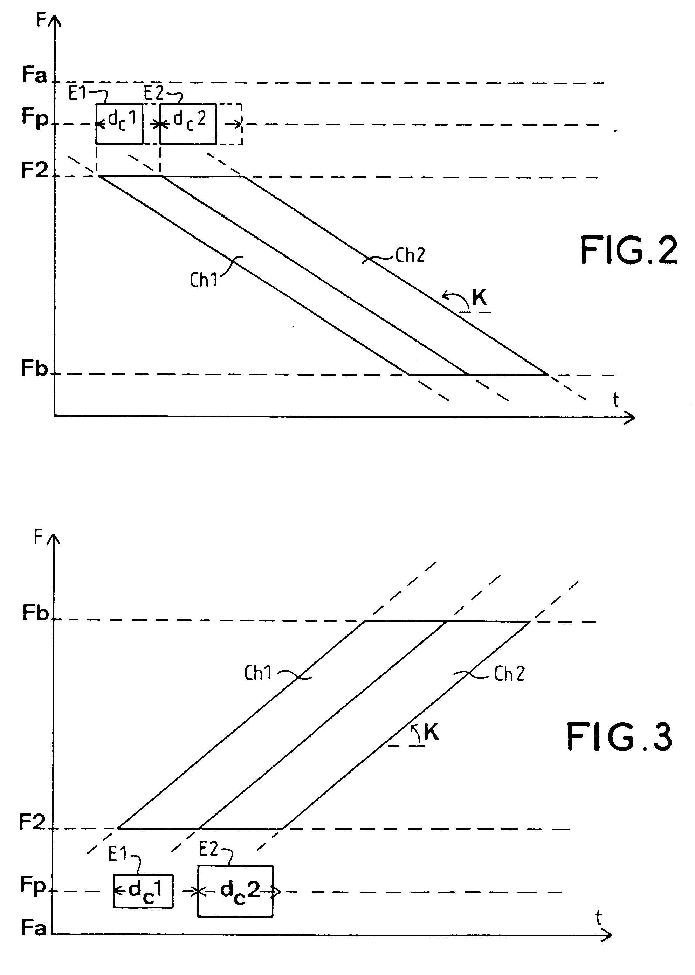

La figure 1 montre comment, dans un réseau de transmission, sont élaborés deux paquets selon le procédé. Sur cette figure, comme sur les figures 2 et 3, les valeurs constantes sont écrites en caractères gras.

La figure 1 est un diagramme avec le temps en abscisse et la fréquence en ordonnée. Chacun des deux paquets représentés comporte un en-tête, E1, E2, suivi d'un champ d'informations qui est émis à l'intérieur d'un parallélogramme de ressources radio réservées Ch1, Ch2.

Les règles régissant l'élaboration des paquets selon la figure 1 sont les suivantes :
- les fréquences d'émission sont, bien entendu, toutes comprises dans la bande de fréquences, Fa-Fb, allouée au réseau de transmission,
- tous les en-têtes sont émis sur une même fréquence porteuse donnée Fp, dans des canaux, dits canaux d'en-tête, de largeur constante mais qui peut varier d'un canal à l'autre,
- les ressources radio allouées au champ d'informations d'un paquet sont limitées à un parallélogramme disjoint en fréquence des canaux d'en-tête et délimité par : deux premières parallèles correspondant à une première et à une deuxième fréquence où la première est une des limites, Fb, de la bande de fréquences allouée au réseau et la deuxième une fréquence, F2, dite fréquence d'origine, constante pour toutes les ressources et comprise entre la fréquence porteuse Fp et la première fréquence extrême Fb ; et deux secondes parallèles ayant la même pente fréquence/temps, K, pour tous les paquets et passant par la fréquence d'origine respectivement un temps x, avec x constant prédéterminé pour tous les paquets, après le début de l'en-tête du paquet considéré et un temps x + d_{c} après le début de l'en-tête, où d_{c} est une durée spécifique, associée au paquet et qui sera précisée dans ce qui suit,
- un paquet ne peut commencer à être émis que si la fréquence porteuse Fp est libre, et son retard par rapport au début du paquet précédent doit au moins être égal à la durée spécifique d_{c} associée au paquet précédent ; bien entendu si cette durée d_{c} ne peut être déterminée, le retard sera pris au moins égal à la valeur maximale susceptible d'être atteinte par la durée d_{c},
- la valeur d_{c} associée à un paquet peut être la largeur du paquet, une information contenue dans le paquet ou une valeur prédéterminée, constante pour tous les paquets.

Les en-têtes E1, E2 représentés sur la figure 1 sont émis sur des canaux de même largeur et c'est la durée d_{c}1, d_{c}2 de ces en-têtes qui constitue la durée d_{c} dont il a été question plus avant.

Les paquets étant définis, comme il a été vu dans ce qui précède, par le début de leur en-tête et leur valeur associée d_{c} il suffit, pour qu'un terminal d'un réseau puisse commencer d'émettre un paquet, qu'il connaisse les valeurs constantes Fp, F2, x et K, qu'il surveille l'émission d'en-têtes par les autres terminaux et qu'il commence à émettre un paquet avec un retard par rapport au début du paquet précédent au moins égal à la durée d_{c} associée au paquet précédent.

Le cas où un terminal a à reconnaître le début et la durée des en-têtes en cours d'émission pour pouvoir décider d'émettre lui-même un paquet, est intéressant. En effet les en-têtes peuvent être émis dans des canaux d'en-tête de largeurs différentes d'un paquet à l'autre mais constantes pour un même paquet ; pour connaître les ressources radio utilisées par les autres terminaux un terminal observe la puissance reçue au voisinage de la fréquence porteuse afin de mesurer la durée d'en-têtes émis par ces autres terminaux ; cette fréquence étant identique pour tous les en-têtes de tous les paquets, l'observation est très simple à réaliser en radio.

La figure 2 illustre le cas de l'envoi de deux paquets successifs dans un même réseau avec des canaux d'en-tête tous de même largeur et avec des durées d_{c}1, d_{c}2 données par des informations contenues dans les en-têtes ; chacune des durées d_{c}1, d_{c}2 est obligatoirement supérieure ou égale à la durée de l'en-tête qui la contient - dans le cas présent elles sont supérieures.

Sur la figure 2 la valeur x, telle que définie lors de la description de la figure 1, est nulle. De plus il est à noter que, sur la figure 2, les deux ressources radio réservées Ch1, Ch2 sont jointives, c'est-à-dire qu'il s'agit du cas particulier où le deuxième des deux paquets a été émis au plus près du premier paquet, assurant ainsi une utilisation maximale du domaine fréquences-temps.

Il est à noter également au sujet des deux paquets selon la figure 2 que leurs en-têtes sont à des fréquences supérieures à celles des ressources radio allouées à leurs champs d'informations ce qui entraîne que ces ressources radio évoluent selon une rampe à pente négative.

La figure 3 illustre le cas de l'envoi de deux paquets successifs dans un même réseau avec des canaux d'en-tête de largeurs différentes. Sur cette figure les durées d_{c}1, d_{c}2 sont égales à une même durée pédéterminée connue de tous les terminaux du réseau, et la valeur x, telle que définie avec la figure 1, est nulle. De plus il est à noter que les deux ressources radio réservées, Ch1, Ch2 sont jointives, le deuxième des deux paquets étant, comme dans le cas de la figure 2, émis au plus près du premier.

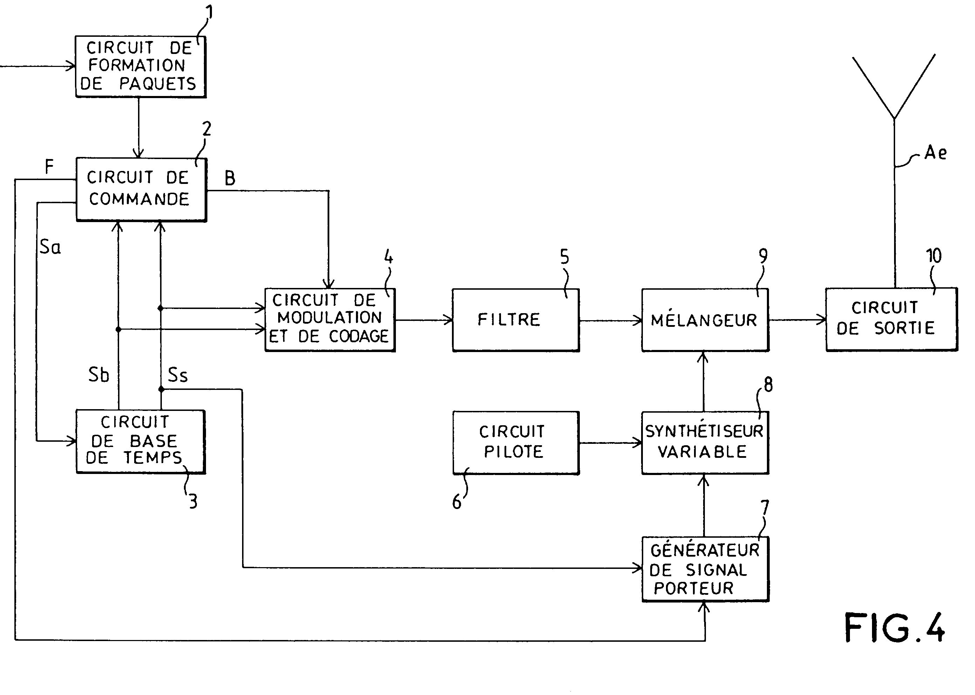

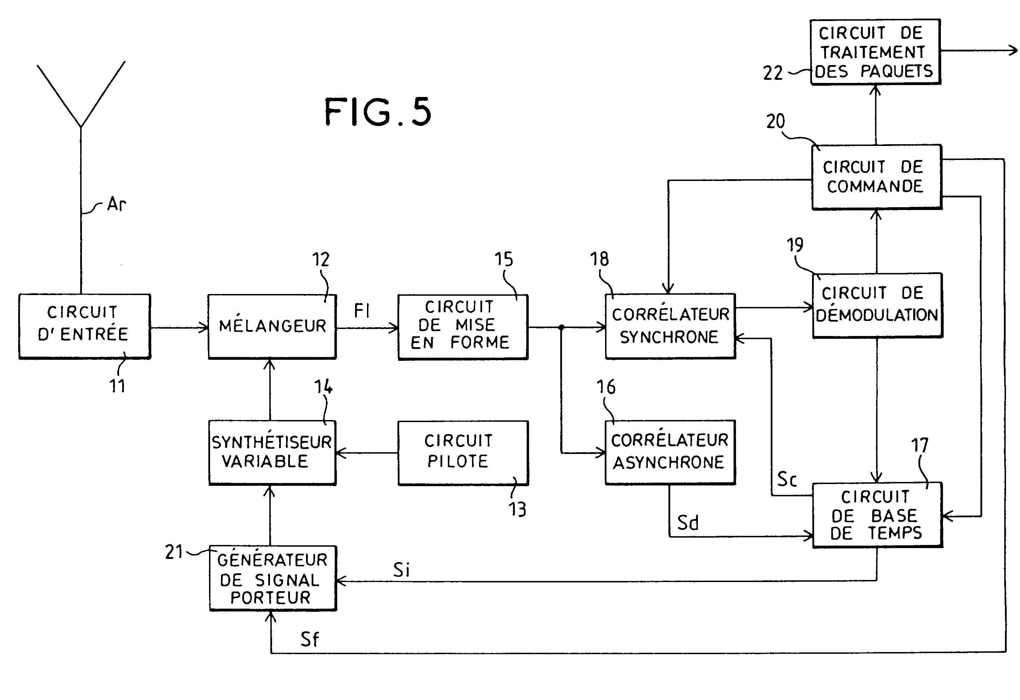

Les exemples de réalisation d'un émetteur et d'un récepteur qui vont être décrits à l'aide des figures 4 et 5, concernent des matériels pour la mise en oeuvre du procédé, qui permettent d'utiliser les ressources radio en restant à l'intérieur du parallélogramme et des canaux d'en-tête décrits ci-avant. Comme l'originalité du procédé, réside dans un fonctionnement à l'intérieur de ces limites, les émetteurs selon la figure 4 et les récepteurs selon la figure 5 sont très voisins d'émetteurs et de récepteurs connus, dont ils se distinguent surtout au niveau de leurs protocoles de fonctionnement tels qu'ils ont été décrits dans ce qui précède ; en fait, connaissant ces protocoles, la réalisation d'un émetteur et d'un récepteur capables de les appliquer ne pose aucun problème à l'homme du métier qui, au contraire, y trouvera certaines facilités. Il a donc été possible d'éliminer, dans ce qui suit, tout ce qui relevait de la technologie courante et ne contribuait pas à la compréhension des exemples de mise en oeuvre du procédé ; les dessins en sont plus claires et l'exposé s'en trouve simplifié.

La figure 4 est un schéma électrique relatif à un émetteur pour la mise en oeuvre du procédé.

Les bits de données à transmettre, D, sont fournis à un circuit de formation de paquets, 1, qui, en fonction des bits qu'il reçoit, délivre des paquets à un circuit de commande 2. Le rôle du circuit 2 est d'introduire dans le paquet des informations et d'organiser les opérations d'émission du paquet. Un circuit de base de temps, 3, délivre les signaux de synchronisation nécessaires aux opérations d'étalement ; le circuit 3 est déclenché par un signal Sa fourni par le circuit 2 à chaque fois qu'il désire commencer les opérations d'étalement d'un paquet.

Pour organiser les opérations d'étalement le circuit de commande 2 dispose des informations sur les ressources radio allouées au paquet et des caractéristiques du paquet à émettre ; il peut ainsi organiser les opérations en respectant les caractéristiques du paquet.

Le circuit de commande 2 reçoit du circuit de base de temps 3 des impulsions de synchronisation des bits, Sb, et de synchronisation des débuts de segments, Ss, c'est-à-dire de synchronisation de l'en-tête et du champ d'informations. Il peut ainsi fournir des groupes de bits, B, correspondant à l'étalement souhaité pour l'émission du paquet considéré.

Un circuit de modulation et de codage, 4, reçoit le signal B et les signaux de synchronisation Sb, Ss ; il fournit un signal modulé formé de segments auxquels sont appliqués les codages déterminés par le circuit de commande 2. Après filtrage dans un filtre 5 ce paquet, auquel sont appliquées des lois d'étalement, arrive sur la première entrée d'un mélangeur 9 qui reçoit sur une seconde entrée un signal à fréquence porteuse dont la valeur est déterminée, pour chaque paquet, par le signal F correspondant au segment, en-tête ou champ d'informations, considéré. Le signal à fréquence porteuse relatif au segment qui arrive sur la première entrée du mélangeur 9 est élaboré par un synthétiseur variable 8 qui reçoit un signal à fréquence fixe fourni par un circuit pilote 6 et un signal de commande de sa fréquence de sortie, constitué par une tension fournie par un générateur de signal porteur 7 ; pour fournir cette tension le générateur 7, qui est synchronisé par les signaux Ss de synchronisation des débuts de segments, reçoit le signal F dont la valeur indique la tension à délivrer par le générateur 7 et donc la fréquence à délivrer par le synthétiseur 8.

Le mélangeur 9, en fonction des signaux qu'il reçoit sur ses deux entrées, délivre donc sur sa sortie des paquets formés de segments.

Un circuit de sortie 10, comportant un filtre large bande en entrée et un amplificateur de puissance en sortie, reçoit le signal élaboré par le mélangeur 9 et fournit des paquets à une antenne Ae.

Pour recevoir ces paquets, il est proposé un récepteur selon la figure 5. Ce récepteur comporte une antenne de réception, Ar, reliée à un circuit d'entrée 11 comportant, en série, un préamplificateur et un filtre à large bande. Le circuit 11 est relié à la première entrée d'un mélangeur 12 qui reçoit sur une seconde entrée le signal de sortie d'un synthétiseur variable 14 ; ce synthétiseur reçoit un signal à fréquence fixe d'un circuit pilote 13. Le signal à fréquence intermédiaire délivré par le mélangeur 12 est mis en forme dans un circuit de mise en forme 15 qui comporte un filtre suivi d'un amplificateur avec commande automatique de gain.

Le mélangeur 12 fournit, grâce au synthétiseur 14 dont le fonctionnement sera vu plus loin, un signal à fréquence intermédiaire constante, modulé par des informations contenues dans les paquets émis par l'émetteur selon la figure 4 ; après passage dans le circuit 15 ce signal est appliqué à l'entrée de deux corrélateurs 16, 18. Le corrélateur 16 est un corrélateur asynchrone qui a pour rôle de rechercher des en-têtes dans son signal d'entrée.

Quand un en-tête est trouvé par le corrélateur 16, un signal de début de paquet, Sd, est délivré par le corrélateur 16 à un circuit de base de temps 17 qui fournit un signal de synchronisation, Sc, au corrélateur synchrone 18. La fréquence du signal Sc, quand ce signal est déclenché par le signal Sd, correspond à la valeur théorique de la fréquence intermédiaire. Le corrélateur 18 est relié à l'entrée d'un circuit de démodulation, 19, lui-même relié à l'entrée d'un circuit de commande 20 et le circuit 20 a une sortie reliée à une entrée de commande du corrélateur synchrone 18 pour lui fournir les caractéristiques des ressources radio, en-tête compris, à utiliser pour le paquet. Les circuits 18, 19, 20 forment donc une boucle.

Le circuit de commande 20 est le pendant du circuit de commande 2 de l'émetteur selon la figure 4. Son rôle principal est d'organiser les opérations de désétalement des paquets reçus ; pour cela il dispose des caractéristiques des ressources radio, en-tête compris, ainsi que des lois d'application de ces ressources. Lorsque le corrélateur asynchrone 16 trouve un en-tête, il déclenche le corrélateur synchrone 18 ; le corrélateur 18 étant réglé initialement pour effectuer un désétalement correspondant aux caractéristiques du paquet. Le circuit de démodulation 19 reçoit ce signal et le démodule pour le fournir au circuit de commande 20 qui, connaissant la structure du paquet, peut déterminer, au fur et à mesure, de l'arrivée des bits, quel est l'étalement ; et ainsi le circuit 20 peut commander le corrélateur synchrone 18 pour que le désétalement utilisé à un moment donné dans ce corrélateur, corresponde à l'étalement du signal sur son entrée reliée à la sortie du circuit 15.

Le circuit de commande 20 peut ainsi fournir des paquets désétalés à un circuit de traitement des paquets 22 et ce dernier circuit délivre les informations contenues dans les paquets à un ou plusieurs utilisateurs destinataires.

Le circuit de démodulation 19 est relié à une entrée du circuit de base de temps 17 pour synchroniser le circuit 17 sur les bits obtenus par démodulation dans le circuit 19.

Le circuit de commande 20 peut également avoir pour rôle de lire dans l'en-tête du paquet, des informations telles que l'adresse de l'expéditeur ou du destinataire du paquet, afin par exemple d'arrêter la prise en compte d'un paquet qui n'est pas destiné au récepteur. Mais surtout le circuit de commande 20 joue un rôle important, et dont il n'a pas encore été question, relativement à la commande du synthétiseur variable14. En effet, au fur et à mesure, qu'il repère un début de segment, il fournit au circuit de base de temps 17 une impulsion de début de segment pour que le circuit 17 puisse élaborer un signal de synchronisation de début de segment Si ; le signal Si est envoyé sur une entrée d'autorisation d'un générateur de signal porteur 21 dont la sortie fournit une tension de commande de la fréquence du synthétiseur variable 14 ; la valeur de cette tension de commande est fonction de la valeur d'un signal Sf fourni au générateur 21 par le circuit de commande 20, et la valeur de Sf est modifiée par le circuit 20 au fur et à mesure de l'apparition des segments et en choisissant dans sa liste des fréquences celle qui correspond au segment reçu à un moment donné ; ainsi commandé, le synthétiseur variable 14 permet au mélangeur 12 d'assurer le désétalement en fréquence et, donc, de fournir le signal à fréquence intermédiaire constante appliqué à l'entrée du circuit de mise en forme 15.

## Revendications

1. Procédé pour gérer des ressources radio dans une bande de fréquences donnée, lors de la transmission de paquets constitués d'un en-tête (E1, E2) suivi d'un champ d'informations radio utiles (Ch1, Ch2), consistant à émettre tous les en-têtes dans des canaux dits canaux d'en-tête, sur une même fréquence porteuse donnée (Fp), avec une largeur de canal d'en-tête donnée pour un paquet donné, caractérisé en ce qu'il consiste également à limiter les ressources radio allouées au champ d'informations d'un paquet donné à un parallélogramme disjoint, en fréquences, des canaux d'en-tête et délimité par deux premières parallèles correspondant à une première fréquence (Fb) et à une deuxième (F2) fréquence extrême, où la première fréquence extrême (Fb) est une des limites de la bande de fréquences donnée et la deuxième fréquence extrême une fréquence (F2) dite fréquence d'origine, constante pour toutes les ressources, et comprise entre la fréquence porteuse et la première fréquence extrême, et par deux secondes parallèles ayant la même pente fréquence/temps (K) pour tous les paquets et passant par la fréquence d'origine respectivement au bout de temps x et x + d_{c}, ces temps étant comptés à partir du début de l'en-tête du paquet donné, x étant constant pour tous les paquets et d_{c} étant une durée spécifique associée au paquet donné et au moins aussi longue que la durée de l'en-tête du paquet donné, et en ce qu'il consiste à ne commencer à émettre un paquet que si la fréquence porteuse est libre et qu'avec un retard par rapport au début du paquet qui précède le paquet donné au moins égal à la durée spécifique d_{c} associée au paquet qui précède le paquet donné.

2. Procédé selon la revendication 1, caractérisé en ce que la durée spécifique d_{c} est la durée de l'en-tête.

3. Procédé selon la revendication 1, caractérisé en ce que la durée spécifique d_{c} est une durée dont la valeur est une information contenue dans l'en-tête.

4. Procédé selon la revendication 1, caractérisé en ce que la durée spécifique d_{c} est une durée prédéterminée, la même pour tous les paquets.

5. Emetteur pour l'émission de paquets constitués d'un en-tête (E1, E2) suivi d'un champ d'informations radio utiles (Ch1, Ch2), caractérisé en ce que, pour la mise en oeuvre du procédé selon l'une des revendications précédentes, il comporte des moyens de commande (2) ayant en mémoire un ensemble d'informations correspondant à la façon d'émettre un paquet selon le procédé afin de commander l'élaboration d'un paquet à transmettre.

6. Récepteur pour la réception de paquets constitués d'un en-tête (E1, E2) suivi d'un champ d'informations radio utiles (Ch1, Ch2), comportant des moyens de surveillance (16) pour repérer les en-têtes et pour déclencher la prise en compte d'un paquet quand son en-tête est repéré, caractérisé en ce que, pour la mise en oeuvre du procédé selon l'une des revendications 1 à 4, il comporte des moyens de commande (20) ayant en mémoire un ensemble d'informations correspondant à la façon dont sont émis les paquets selon le procédé afin de commander la prise en compte d'un paquet quand son en-tête est repéré.
